# EUROPEAN PATENT SPECIFICATION

(11) **EP 3 209 241 B1**
(45) Date of publication and mention of the grant of the patent: **12.12.2018**
(21) Application number: 15798311.5
(22) Date of filing: 15.10.2015
(51) Int. Cl.: A61C 19/05

(54) **INSTRUMENT FOR MEASURING THE POSITION OF THE LOWER JAW AND METHOD WHEREBY SUCH AN INSTRUMENT IS APPLIED**
INSTRUMENT ZUR MESSUNG DER POSITION DES UNTERKIEFERS UND VERFAHREN UNTER ANWENDUNG SOLCH EINES INSTRUMENTS
INSTRUMENT DE MESURE DE POSITION DE MÂCHOIRE INFÉRIEURE, ET PROCÉDÉ PAR LEQUEL UN TEL INSTRUMENT EST APPLIQUÉ

(30) Priority: 24.10.2014 BE 201405029
(43) Date of publication of application: 30.08.2017
(73) Proprietor: Novoden Tec BVBA, 2000 Antwerpen (BE)
(72) Inventor: BRAEM, Marc, B-2000 Antwerpen (BE); BRAEM, David, B-2000 Antwerpen (BE)
(74) Representative: Isfort, Olaf
(86) International application number: PCT/BE2015/000052
(87) International publication number: WO 2016/061638

(56) References cited:
- WO-A1-93/01761
- WO-A2-2010/141868
- DE-A1- 10 154 994
- US-A- 5 374 237
- US-A1- 2007 209 666
- US-B1- 8 123 521

## Description

Instrument for measuring the position of the lower jaw and method whereby such an instrument is applied.
The present invention relates to an instrument for measuring the position of the lower jaw and a method whereby such an instrument is applied.

Such an instrument and method is disclosed in WO93/01761.

The present invention is defined in the claims. More specifically, the invention is intended for measuring the position of the lower jaw with respect to the upper jaw with awake, anaesthetised and/or unconscious patients in order to assess and establish the effect of the forward positioning of the lower jaw on the air passage in the top airway.

It is known that with certain patients the top airway closes at one or more levels while sleeping. These patients can suffer from snoring and/or 'obstructive sleep apnoea' (OSA) or the obstructive sleep apnoea syndrome (OSAS).

It is now generally accepted that the moving forward or protrusion of the lower jaw or mandible can improve the accessibility in this top airway.
In general this invention covers an instrument that accurately measures the individual dynamic positioning of the lower jaw, with awake patients, and with anaesthetised and/or unconscious patients, for the purpose of examining and determining the most optimum forward position of the lower jaw prior to the treatment of snoring and/or OSA and/or OSAS.

Changes in the accessibility of the top airway are in general simulated by the forced moving forward or protrusion of the lower jaw or mandible with awake and/or anaesthetised and/or unconscious patients. The effects of such a protrusion on the air passage in the top airway are then evaluated making use of nasendoscopic techniques in a sedated patient. Such a protrusion of the lower jaw is often tried out in patients with obstructive sleep apnoea who qualify for the use of a therapy with an oral correction device for which a prior accurate measurement of the desired lower jaw protrusion is required.

The attending physician faces a number of problems when he tries to evaluate the effects of the mandibular protrusion on the air passage in the top airway by means of the "chin lift" manoeuvre:
1. The forced protrusion, in general known as the "chin lift" manoeuvre, results in a mandibular position that is almost irreproducible, which impedes the accurate measurement as well as the determination of the desired protrusion;
2. This forced protrusion is moreover an extreme manoeuvre and it is improbable that a patient would tolerate this position of the lower jaw resulting from this, and is thus of minimal clinical value for patients who qualify for the use of an oral correction device;
3. This forced protrusion has an intrinsically variable and uncontrolled vertical component whereby the mouth is undesirably opened, depending on how the manoeuvre is performed, which again is difficult to reproduce;
4. Once the optimum protrusive position has been selected by means of an instrument for measuring the position of the lower jaw, there are no means to accurately and dynamically convey this position, whereby ideally, together with the limit positions of maximum protrusion and retrusion, the protrusive path between these extreme positions must also be converted into the oral correction device that must be produced by the dental technician.

Despite its difficulties and inadequacies, the "chin lift" manoeuvre described above remains the most generally used method for determining the air passage through the top airways, irrespective of its incapacity to convey the diagnosed optimum horizontal and vertical relationship between the upper and lower jaw as it exists in the individual patient.

The reason for this is that up until now nobody has developed a reproducible measurement method that can perform a correct position measurement of the lower jaw of the patient and can then convey this position, together with the protrusive path, to the therapeutic oral correction devices such that the bite registration also enables the protrusive path to be checked during the production of the correction device.

There are a number of measuring instruments that are able to accurately make bite registrations, but they lack the dynamic component of the back and forth guidance of the lower jaw.

Such a measuring instrument is the George meter (U.S. Pat. No. 5.154.069 of Peter George, dated 13 October 1992). Once the bite registration has been made, no further adaptation and/or check of the protrusive path can be made as the bite registration determines the lower jaw with respect to the upper jaw and does not allow further movement. Furthermore, such instruments can only be used on awake patients as they rely on voluntarily mandibular movements.

Another measuring instrument that can determine the position of the lower jaw with respect to the upper jaw or maxilla in three dimensions, including the vertical, is the Andrea Meter (US 2004/0241464 A1). Its capacity to register the retrusion and protrusion positions and the vertical positions, while a precise positioning of the sagittal movement is made, makes the device precise, accurate and reproducible. Again, once a position has been chosen and the bite registration has been made, no further adaptation and/or check of the protrusive path is possible as the bite registration determines the lower jaw with respect to the upper jaw.

Another measuring instrument that enables the horizontal and vertical position of the lower jaw to be measured in the patient and which enables the individual positioning of the teeth has been developed by Holstrom (U.S. Pat. No. 7.832.403 2B of Holstrom et al., dd. 16 November 2010). This measuring instrument has the disadvantage that the parts that are placed over the teeth of the upper jaw and the lower jaw, and which take up space in the mouth, are very voluminous and due to their volume push the tongue away, such that changes in the accessibility of the top airway are introduced that no longer relate to the sleep apnoea or which even cause displacements of the surrounding soft tissue that counteract the possible favourable effects of the mandibular protrusion.

There is no known current method that enables the operator of the measuring instrument:
(1) to individually adapt the measuring instrument to the patient with a minimum disturbance of the surrounding soft tissues in the mouth;
(2) to dynamically position the lower jaw of the patient accurately and reproducibly both before and after the bite registration;
(3) to register the optimum protrusion for transfer to an oral correction device that has to be produced, including the capacity for an in vitro check of the protrusive path.

The purpose of the present invention is to provide a solution to the aforementioned and other disadvantages of the current position measurements, by providing a new improved instrument for this position measurement of the lower jaw by being provided with a top and bottom bite fork, that are individually adapted to the upper and lower tooth arch of a patient, whereby the top and bottom bite fork are each provided with an extension that extends in a horizontal plane in front of the teeth of the patient with the measuring instrument in the mouth, so that the extensions are outside the mouth of the patient, and whereby these extensions enable both bite forks to move with respect to one another in the sagittal direction in the horizontal movement plane before and after bite registration, while the instrument is placed in the mouth of the patient, and moreover enables the relative position of the bite forks to be conveyed outside the mouth of the patient, and all this in a minimal invasive way and whereby the front edge of the bottom and top bite fork present a bevelling such that the movement of the bottom bite fork with respect to the top bite fork proceeds steplessly.

The present invention also enables the thickness of the top and/or bottom bite fork to be adapted and thus the vertical component of the registration to be kept variable.

This can be done by, but is not limited to, end pieces provided to this end fastened in the existing retention holes, but also by adapting the thickness of the bite fork itself.

An advantage of this adaptation of the vertical dimension is that it enables the effect of the opening of the lower jaw during the forward movement of the lower jaw to be examined, and this in a reversible way as the changes in the vertical dimension after and/or during the examination are adjustable as a function of the findings.

An advantage of such a measuring instrument is that each desired position in the protrusive path as well as the entire protrusive path can thereby be conveyed afterwards to any oral correction device that must be produced using known materials for teeth impressions.

Another advantage of such bite forks with extensions is that the measurements of their relative position are done outside the mouth of the patient and on account of the particularly small volume, without undesired side-effects such as the bite forks pushing the tongue away or the soft tissues in the mouth.

The mutual movement between the top and bottom bite fork remains possible because the material used for the bite registration does not impede the opposite fork because the retention holes for this registration material do not run through the fork but have a thin seal. This prevents the material used for the bite registration getting into the opposite fork and thereby the functionality of the measuring instrument is limited.

In a preferred embodiment the instrument for measuring the position of the lower jaw is provided with an integrated sliding part over the extensions, that not only serves to hold the extensions together during use, but also acts as means for the operator to make the desired markings on the top extension that correspond to the measured positions of the lower jaw, i.e. at least the maximum protrusion and retrusion, and the protrusion position chosen for insertion of an oral correction device that has to be produced on the basis of this chosen protrusion position.

An advantage of such a sliding part is that it enables the instrument for measuring the position of the lower jaw to be used in clinical conditions whereby the patient can be awake or unconscious, and can be used as an aid to measure the optimum relative position of the top and bottom bite forks for the purpose of optimum accessibility of the top airways.

After removal of the individual bite forks with extensions from the mouth of the patient, they can be used to convey the position of the upper jaw with respect to the lower jaw to a simulator by means of the present invention. To this end the "incisive pin" of the simulator concerned has to be replaced by the design described hereinafter such that the centrally situated incisive pin provides space for the extensions of the present invention and thus enables the simulation of the movements of the lower jaw with respect to the upper jaw without hindrance for this incisive pin.

An additional advantage of these accurate replaceable bite forks is that they thus enable the changes in the relative position of the upper and lower jaw to be quantitatively and accurately monitored over time, in order to supervise the patients and monitor any tooth movements as a function of time.

Preferably the components of the instrument for measuring the position of the jaws are made of materials suitable for automated production methods such as injection moulding of polymers, numerically controlled milling machines for metals, or robotics or other automated production methods. In very specific cases the components are made of sterilisable materials.
An advantage of these automatically produced components is that they are very accurate but nonetheless affordable, and also reusable.
With the intention of better showing the characteristics of the invention, a preferred embodiment of the instrument for measuring the position of the lower jaw according to the invention is described hereinafter by way of an example, without any limiting nature, with reference to the accompanying drawings, wherein:
figure 1 schematically shows an exploded perspective view of an instrument for measuring the position of the lower jaw not according to the invention;
figure 2 shows the natural habitual conclusion with the tooth arches of a set of teeth against one another;
figure 3 shows the top bite fork of the instrument according to figure 1 provided with self-polymerising bite registration paste;
figure 4 shows the instrument according to figure 1 placed in the mouth of a patient, positioned by his frontal incisors;
figure 5 shows the sliding part around the two bite forks of the instrument according to figure 1 in more detail;
figure 6 shows figure 4 but after maximum horizontal forward movement of the bottom bite fork with respect to the top bite fork;
figure 7 shows figure 4 but after maximum horizontal backward movement of the bottom bite fork with respect to the top bite fork;
figure 8 shows the markings of selected positions between the top and bottom bite fork on the extension of the top bite fork;
figure 9 shows figure 4 but in a possible preferred position and whereby the bite forks are provided with bite registration paste over their entire arch length;
figure 10 shows the instrument for measuring the position of the lower jaw not according to the invention
in the preferred position between the upper and lower jaw, after removal of the bite registration from the mouth of the patient;
figure 11 shows a perspective view of a cross-section of a top and bottom bite fork provided with a thickening not according to the invention;
figure 12 shows the embodiment according to the invention, which is a variant of figure 1, whereby the retention holes for the registration material are sealed by a thin seal at the bottom;
figure 13 shows a perspective view of an adapted incisive pin according to the invention.

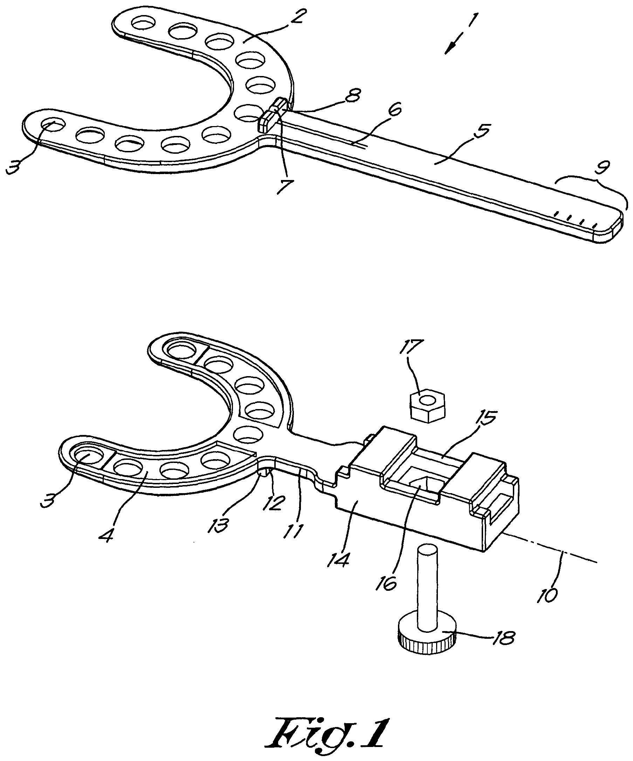

Figure 1 shows an exploded perspective view of the instrument 1 for measuring the position of the lower jaw not according to the invention, consisting of a top bite fork 2 with retention holes 3 with seal for the mechanical anchoring of the registration material to be applied later, and a bottom bite fork 4 with retention holes 3 with seal for the mechanical anchoring of the registration material to be applied later. The top bite fork 2 is provided with an extension 5, whose longitudinal axis coincides with a notch 7 of an upright edge 8, against which the upper frontal incisors of the patient are positioned, and with examples of gradations on the top of the extension 5. The longitudinal axis 10 of the extension 11 of the bottom bite fork 4 coincides with the notch 12 of a downward edge 13 against which the lower frontal incisors of the patient are positioned. The bottom extension 11 leads to a sliding part 14 that is provided with a window 15 through which the top extension 5 can be seen when it is introduced, and this is in different sliding part positions with respect to the bottom extension 11. The sliding part 14 is provided with a cutaway 16 for a screw bolt 17 that engages with a set screw 18 that goes through it up to against the extension 5 of the top bite fork 2.

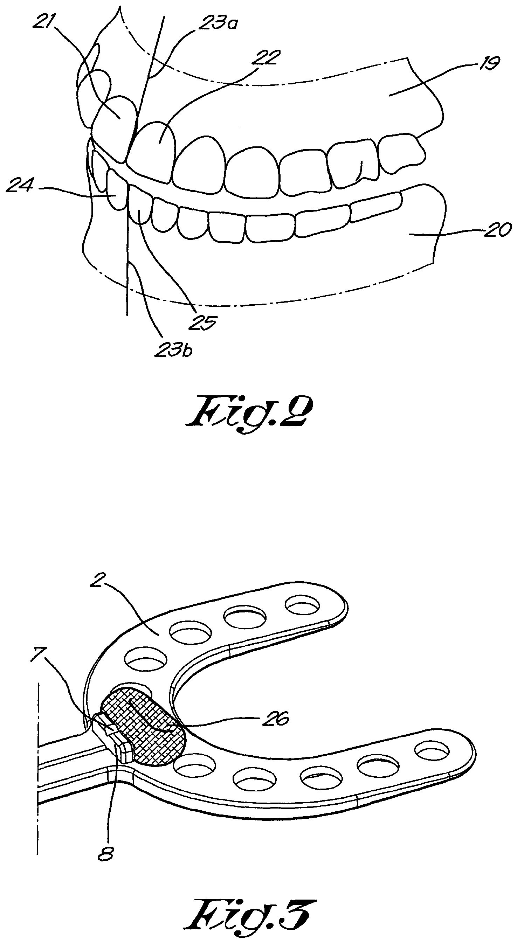

Figure 2 shows the natural habitual position of a set of teeth with the upper tooth arch 19 and the lower tooth arch 20 at some distance from one another in which the natural position of the upper frontal incisors 21, 22 separated by the inter-incisor line 23a are shown, with respect to the lower frontal incisors 24, 25 separated by their inter-incisor line 23b.

Figure 3 shows the top bite fork 2 of the instrument 1 for measuring the position of the lower jaw prior to placement in the mouth, provided with a small quantity of self-polymerising bite registration paste 26 against the upright edge 8 of the top bite fork 2 at the level of the position intended for the top frontal incisors 21, 22.

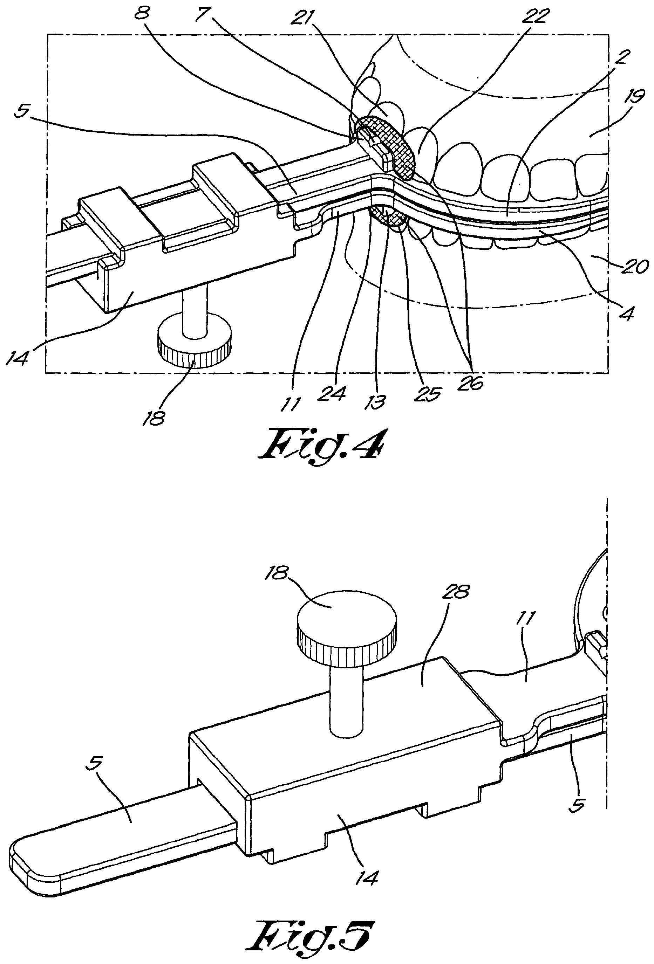

Figure 4 shows the instrument 1 for measuring the position of the lower jaw, placed in the mouth of a patient, and positioned against his frontal incisors, i.e. the upper frontal incisors 21 and 22 that fit in the hardened bite registration paste 26 and which are close to the upright edge 8 of the top bite fork 2, and the lower frontal incisors 24 and 25 that fit in the hardened bite registration paste 26 and which are close to the downward edge 13 of the bottom bite fork 4 of the instrument 1. The set screw 18 does not yet make contact with the extension 5 of the top bite fork 2 so that the bottom bite fork moves unimpeded with respect to the top bite fork.

Figure 5 shows the bottom 28 of the sliding part 14 in more detail to which the extension 11 of the bottom bite fork 4 leads and in which a set screw 18 can be screwed against the extension 5 of the top bite fork 2 that slides through the sliding part 14 so that the bottom bite fork is fixed with respect to the top bite fork and no longer moves.

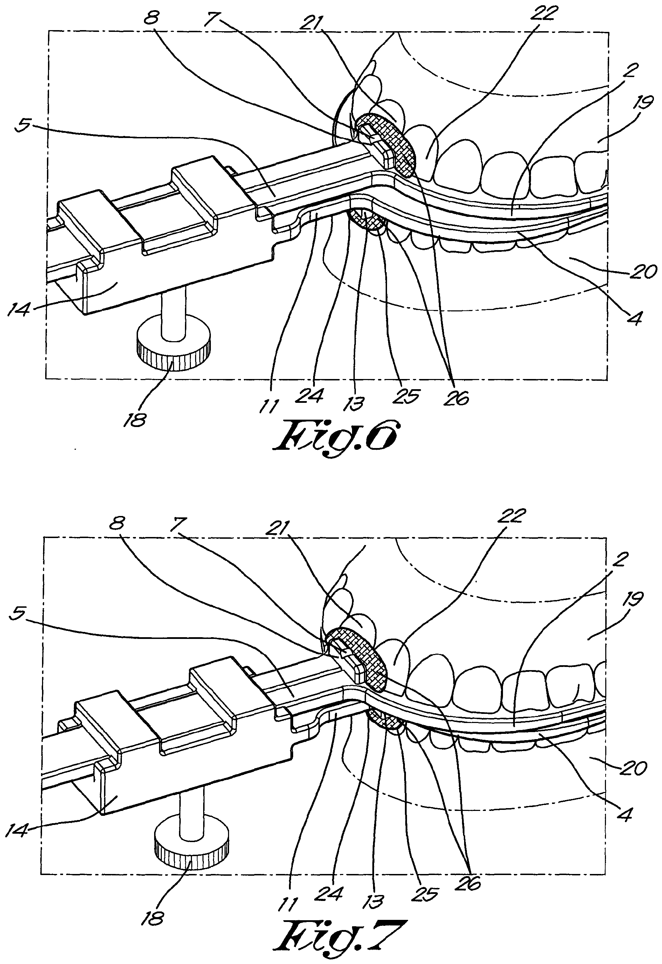

Figure 6 shows the instrument 1 for measuring the position of the lower jaw, placed in the mouth of the patient without fixation of the set screw 18 and positioned by his frontal incisors 21, 22, 24, 25, but now after maximum forward horizontal movement of the bottom bite fork 4 with respect to the top bite fork 2.

Figure 7 shows the instrument 1 for measuring the position of the jaws placed in the mouth of a patient without fixation of the set screw 18 and positioned by his frontal incisors 21, 22, 24, 25, but now after maximum backward horizontal movement of the bottom bite fork 4 with respect to the top bite fork 2.

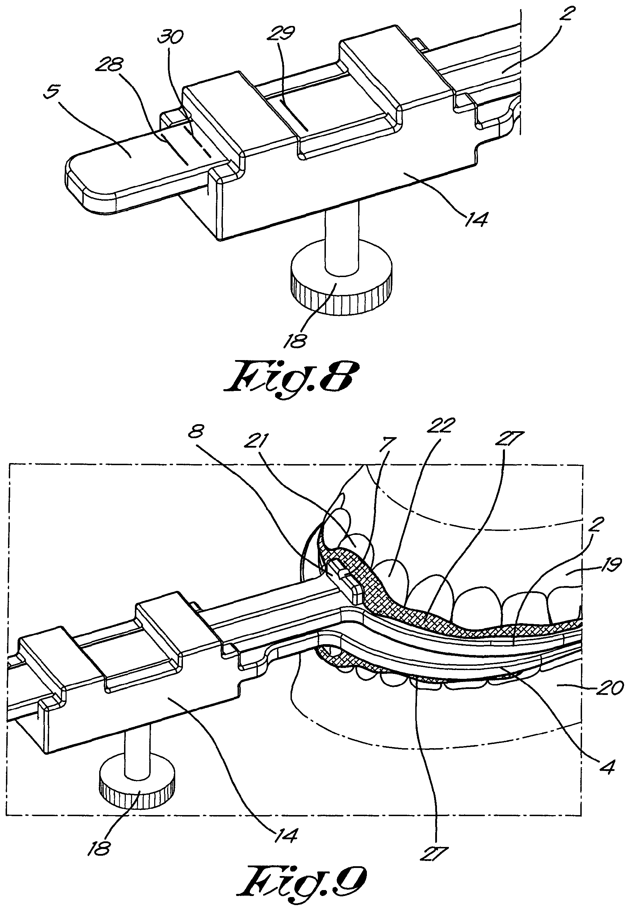

Figure 8 shows the top of the extension 5 of the top bite fork 2, on which three markings are made, i.e. the maximum horizontal movement of the bottom bite fork 4 forwards 28, backwards 29, and the chosen intermediate position 30, that will be used for making the oral correction device and in this case is the only one marked by a dashed line to distinguish it from the most forward and most backward positions.

In figure 9 the instrument 1 for measuring the position of the lower jaw in its chosen preferred position is indicated by the dashed marking 30 and fixed in this position by the set screw 18 is introduced in the mouth of the patient, whereby the top and bottom bite fork are now provided over their entire arch length with a bite registration paste 27, that contain a faithful impression of the upper tooth arch 19 and lower tooth arch 20.

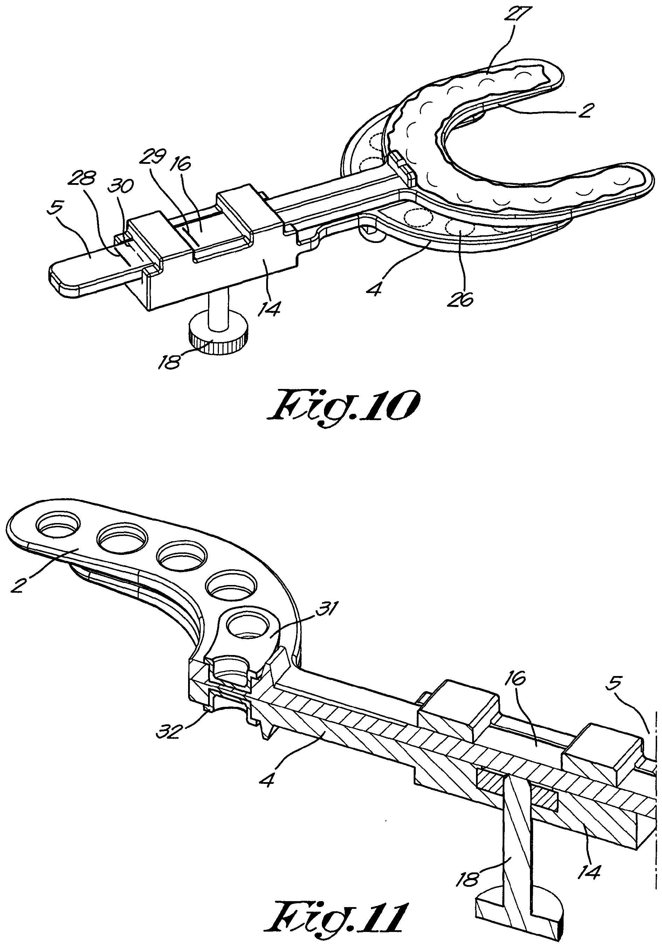

Figure 10 shows the instrument 1 for measuring the position of the lower jaw in its chosen preferred position, after hardening of the bite registration paste 26 on the top 2 and bottom 4 bite forks, and after the instrument 1 has been taken out of the mouth of the patient in a position fixed with the set screw 18, so that the relative position of the top 2 and bottom 4 bite fork remains preserved, and can be used for producing an oral correction device appropriate for the patient.
Figure 11 presents a cross-section in the longitudinal direction of the instrument 1 for measuring the position of the lower jaw, but now provided with a thickening, for example but not limited to, in the form of end pieces 31, 32 for the top bite fork 2 and/or for the bottom bite fork 4. Such an end piece 31, 32 fits in the retention holes of the top or bottom bite fork and is provided with different thicknesses in steps of 2 mm. Such an end piece 31,32 enables the thickness of the bottom and/or bottom bite fork to be adjusted to the needs of the examination and/or the characteristics of the patient.

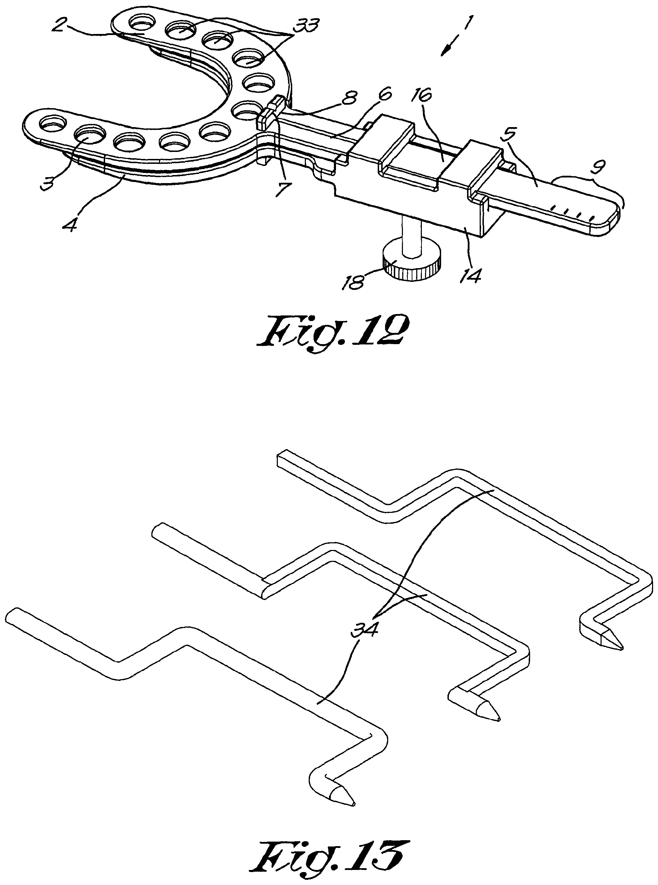

Figure 12 presents a perspective view of the embodiment according to the invention, which is a variant of the instrument 1 for measuring the position of the lower jaw that is now provided with retention holes 3 for the registration material, that are sealed at the bottom by a thin seal 33 over the entire surface of the bite forks 2,4 without registration material from the one bite fork 2 being able to penetrate to the other bite fork 4.
Figure 13 shows a perspective view of an incisive pin 34 according to the invention in three variants, whereby this incisive pin serves to replace the existing incisive pins in simulators, such that the bite forks with extensions 2,4 of this invention can be placed in the existing simulators without steric hindrance. This enables the technician to produce an oral correction device under optimum conditions using an existing simulator.

The area of application of the instrument 1 for measuring the position of the lower jaw enables a dynamic bite registration to be measured in a patient who:
a) still has his own teeth elements, including crowns and/or bridges or otherwise placed over his own teeth elements or placed directly or indirectly on implants;
b) or has a partial removable prosthesis;
c) or has a complete removable prosthesis that preferably, but not necessarily, is anchored on implants.

The method for using the instrument 1 for measuring the position of the lower jaw in order to obtain a valid dynamic bite registration is as follows.

Hereby upper tooth arch 19 and lower tooth arch 20 mean the teeth elements present in the mouth consisting of one or any combination as described above under a), b) or c) and configured in an arch that follows the form of the jaw bones. The method at least consists of the following steps:
1) the determination of the natural habitual occlusion by getting the patient to bite and bring the tooth arches against one another, without there being anything between the antagonistic tooth arches;
2) the introduction of the top bite fork 2 against the upper tooth arch 19 of the patient whereby the inter-incisor line 23a between the two upper central frontal incisors 21, 22 are in line with the longitudinal centreline 6 of the extension 5 of the top bite fork 2 and whereby the outermost vestibular plane of these upper frontal incisors 21, 22 are against an upright edge 8 with notch 7, again with the inter-incisor line 23a between both frontal incisors 21,22 in line with the notch 7;
3) the optional selection of a thickening, for example in the form of end pieces 31,32 of a suitable thickness in the existing retention holes at the level of the incisors in the top and/or bottom bite fork to adjust the thickness of the bite fork or bite forks concerned, or in the form of a thicker bite fork.
4) the introduction of the bottom bite fork 4 against the lower tooth arch 20 taking account of an analogous positioning of the lower frontal incisors 24, 25 with respect to the downward edge 13 with notch 12 on the bottom bite fork 4;
5) the introduction of a bite registration paste 26 of inelastic self-polymerising material against the mouth side of the upright 8 and the downward 13 edge of the two bite forks 2, 4;
6) the careful placement of the two bite forks 2, 4 in the mouth, whereby the centrelines 6 of the extensions 5, 11 are in line with the inter-incisor line 23a,23b and whereby the two bite forks 2, 4 are held together by a sliding part 14;
7) letting the bite registration paste 26 harden until the upper 21, 22 and lower 24, 25 frontal incisors are positioned on respectively the top 2 and bottom 4 bite fork, after which the instrument 1 is taken out of the mouth of the patient;
8) the loosening of the set screw 18 that fixes the top and bottom bite fork 2, 4 so that the top 2 and bottom 4 bite fork slide freely with respect to one another in a horizontal plane, ensuring that the bottom bite fork 4 does not move too much;
9) putting the instrument 1 back in the mouth of the patient whereby the patient positions his front incisors 21, 22, 24, 25 in the preformed bite registration paste 26;
10) letting the patient move his lower jaw as straight as possible to the front and back in the horizontal plane between the two bite forks 2,4 without taking any measurements, and repeating this a few times so that the masseters of the patient become supple, the temporomandibular joint becomes supple and the patient becomes familiar with the exercise;
11) letting the patient move his lower jaw forwards to the maximum possible without opening his mouth and without exerting too much force on the instrument, and registering this position 28 by marking means, and preferably repeating this a few times to foster the accuracy of the measurement;
12) letting the patient move his lower jaw backwards to the maximum possible without opening his mouth and without exerting too much force on the instrument, and registering this position 29 by marking means, and preferably repeating this a few times to foster the accuracy of the measurement;
13) finally the gradual and gentle forward movement of his lower jaw by the patient from a backward located position up to the position that the patient can adopt without too much discomfort, depending on the characteristics and capabilities of the patient, and preferably repeating this movement a few times to be certain that this preferred position 30 can be reproducibly adopted by the patient, in order to then register this best position for the patient between the front and back position on the instrument by marking means in a distinctive manner with respect to the front and back position markings;
14) the screwing in of the set screw 18 on the instrument 1 so that the bite forks 2, 4 no longer move with respect to one another and taking the instrument 1 out of the mouth;
15) the application of bite registration paste 26 or another fixing means over the entire arch length of the top bite fork 2 and the bottom bite fork 4, ensuring that the bottom bite fork 4 remains correctly positioned, and this simultaneously or bite fork by bite fork;
16) the introduction of the instrument 1 into the mouth again, in different phases or otherwise and letting the bite registration paste 26 harden on one or both bite forks 2,4 simultaneously, in the chosen position;
17) taking the instrument 1 out of the mouth for the positioning of the lower jaw and thorough rinsing under running water and/or blow drying with oil-free compressed air;
18) the delivery of the instrument 1 with the impressions of the upper tooth arch 19 and lower tooth arch 20 in the registration paste 27 on the bite forks 2,4 that act as an aid for the production of an oral correction device for the patient concerned;
19) the optional delivery of the instrument 1 according to step 18), supplemented by an adapted incisive pin suitable for placement in a simulator, such that the bite forks with extensions can be placed in the simulator without steric hindrance, which enables the technician to produce the oral correction device under optimum conditions;
20) the dismantling of the instrument 1 whereby both bite forks 2, 4 are released and cleaned so that the instrument 1 can be reused, and new measurements can be made with it in another patient or in the same patient at another time.

The present invention is as described in the following claims.

## Claims

1. Instrument (1) for measuring the position of the lower jaw provided with a top (2) and a bottom (4) bite fork, that are individually adaptable to the upper (19) and lower (20) tooth arch of a patient, whereby the top (2) and bottom (4) bite fork are each provided with an extension (5, 11) that extends in a horizontal plane in front of the teeth of the patient when the instrument (1) is placed in the patient's mouth, so that the extensions (5, 11) extend outside the mouth of the patient, and whereby these extensions enable the bite forks (2, 4) to move with respect to one another in the horizontal movement plane, while the instrument is placed in the mouth of the patient, and enables the relative position of the bite forks and thus the relative position of the upper and lower tooth arch (19, 20) to be registered outside the mouth of the patient and whereby the top (2) and bottom (4) bite fork have retention holes (3) for the mechanical anchoring of a registration material to be applied, and whereby these retention holes (3) are sealed at the bottom by a thin seal (33) over the entire surface of the bite forks (2, 4).

2. Instrument for measuring the position of the lower jaw according to claim 1, **characterised in that** both the bottom and top bite fork taper dorsally with regard to the side of the bite fork that is oriented towards the chewing surfaces of the teeth such that the natural curvature of the tooth arches, as defined by the Curve of Spee, is respected and the forward movement of the lower jaw is not hindered by this individual curvature of the row of chewing surfaces.

3. Instrument for measuring the position of the lower jaw according to claim 1, **characterised in that** the instrument is provided with a sliding part (14) over the extensions (5, 11), not only to keep the extensions of the top and bottom bite fork together, but also as means for the operator of the instrument 1 to make the desired markings (28, 29, 30) on the top extension (5), corresponding to a certain number of positions of the lower jaw, i.e. at least the maximum protrusion (28) and retrusion (29), and the selected protrusion position (30) for the production of an oral correction device.

4. Instrument for measuring the position of the lower jaw according to claim 1 or 2, **characterised in that** the individual bite forks (2, 4) with extensions (5, 11) define an accurate position in the mouth of the patient to enable monitoring of individual patients over time by placing back the earlier removed instrument in the patient's mouth.

5. Instrument for positioning the lower jaw according to claim 1 or 2, **characterised in that** the components thereof (2, 3, 4, 5, 11, 14, 18) are made of materials suitable for automated production methods such as injection moulding of polymers, numerically controlled milling machines for metals, or robotics or other automated production methods, including those for sterilisable materials.

6. Method for the use of the instrument (1) for measuring the position of the lower jaw described in one of the previous claims consisting of at least the following steps:
1) the determination of the natural habitual occlusion by getting the patient to bite and bring the tooth arches against one another, without there being anything between the antagonistic tooth arches;
2) the introduction of the top bite fork (2) against the upper tooth arch (19) of the patient whereby the inter-incisor line (23a) between the two upper central frontal incisors (21, 22) are in line with the longitudinal centreline (6) of the extension (5) of the top bite fork (2) and whereby the outermost vestibular plane of these upper frontal incisors (21, 22) are against an upright edge (8) with notch (7), again with the inter-incisor line (23a) between both frontal incisors (21,22) in line with the notch (7);
3) the optional affixing of a thickening, for example in the form of end pieces (31,32) of a suitable thickness in the existing retention holes at the level of the incisors in the top and/or bottom bite fork to adjust the thickness of the bite fork or bite forks concerned, or in the form of a thicker bite fork.
4) the introduction of the bottom bite fork (4) against the lower tooth arch (20) taking account of an analogous positioning of the lower frontal incisors (24, 25) with respect to the downward edge (13) with notch (12) on the bottom bite fork (4);
5) the introduction of a bite registration paste (26) of inelastic self-polymerising material against the mouth side of the upright (8) and the downward (13) edge of the two bite forks (2, 4);
6) the careful placement of the two bite forks (2, 4) in the mouth, whereby the centrelines (6) of the extensions (5, 11) are in line with the inter-incisor line (23a, 23b) and whereby the two bite forks (2, 4) are held together by a sliding part (14);
7) letting the bite registration paste (26) harden until the upper (21, 22) and lower (24, 25) frontal incisors are positioned on respectively the top (2) and bottom (4) bite fork, after which the instrument (1) is taken out of the mouth of the patient;
8) the loosening of the set screw (18) that fixes the top and bottom bite fork (2, 4) so that the top (2) and bottom (4) bite fork slide freely with respect to one another in a horizontal plane, ensuring that the bottom bite fork (4) does not move too much;
9) putting the instrument (1) back in the mouth of the patient whereby the patient positions his front incisors (21, 22, 24, 25) in the preformed bite registration paste (26) ;
10) letting the patient move his lower jaw as straight as possible to the front and back in the horizontal plane between the two bite forks (2, 4) without taking any measurements, and repeating this a few times so that the masseters of the patient become supple, the temporomandibular joint becomes supple and the patient becomes familiar with the exercise;
11) letting the patient move his lower jaw forwards to the maximum possible without opening his mouth and without exerting too much force on the instrument, and registering this position (28) by marking means, and preferably repeating this a few times to foster the accuracy of the measurement;
12) letting the patient move his lower jaw backwards to the maximum possible without opening his mouth and without exerting too much force on the instrument, and registering this position (29) by marking means, and preferably repeating this a few times to foster the accuracy of the measurement;
13) finally the gradual and gentle forward movement of his lower jaw by the patient from a backward located position up to the position that the patient can adopt without too much discomfort, depending on the characteristics and capabilities of the patient, and preferably repeating this movement a few times to be certain that this preferred position (30) can be reproducibly adopted by the patient, in order to then register this best position for the patient between the front and back position on the instrument by marking means in a distinctive manner with respect to the front and back position markings;
14) the screwing in of the set screw (18) on the instrument (1) so that the bite forks (2, 4) no longer move with respect to one another and taking the instrument (1) out of the mouth;
15) the application of bite registration paste (26) or another fixing means over the entire arch length of the top bite fork (2) and the bottom bite fork (4), ensuring that the bottom bite fork (4) remains correctly positioned, and this simultaneously or bite fork by bite fork;
16) the introduction of the instrument (1) into the mouth again, in different phases or otherwise and letting the bite registration paste (26) harden on one or both bite forks (2, 4) simultaneously, in the chosen position;
17) taking the instrument (1) out of the mouth for the positioning of the lower jaw and thorough rinsing under running water and/or blow drying with oil-free compressed air;
18) the delivery of the instrument (1) with the impressions of the upper tooth arch (19) and lower tooth arch (20) in the registration paste (27) on the bite forks (2, 4) that act as an aid for the production of an oral correction device for the patient concerned;
19) the optional delivery of the instrument (1) according to step 18), with the addition of an adapted incisive pin suitable for placement in a simulator, such that the bite forks with extensions can be placed in the simulator without steric hindrance, which enables the technician to produce the oral correction device under optimum conditions;
20) the dismantling of the instrument (1) whereby both bite forks (2, 4) are released and cleaned so that the instrument (1) can be reused, and new measurements can be made with it in another patient or in the same patient at another time.

## Patentansprüche

1. Instrument (1) zum Messen der Position des Unterkiefers mit einer oberen (2) und einer unteren (4) Bissgabel, die individuell an den oberen (19) und unteren (20) Zahnbogen eines Patienten anpassbar sind, wobei die obere (2) und untere (4) Bissgabel jeweils mit einer Verlängerung (5, 11) versehen sind, die sich in einer horizontalen Ebene vor den Zähnen des Patienten erstreckt, wenn das Instrument (1) im Mund des Patienten platziert wird, so dass sich die Verlängerungen (5, 11) außerhalb des Mundes des Patienten erstrecken, und wobei diese Verlängerungen ermöglichen, dass sich die Bissgabeln (2, 4) in der horizontalen Bewegungsebene zueinander bewegen, während das Instrument im Mund des Patienten platziert wird, und so ermöglichen die relative Position der Bissgabeln und damit die relative Position des oberen und unteren Zahnbogens (19), 20) außerhalb des Mundes des Patienten zu erfassen und wobei die obere (2) und untere (4) Bissgabel Rückhaltelöcher (3) für die mechanische Verankerung eines aufzutragenden Registriermaterials aufweisen, und wobei diese Rückhaltelöcher (3) unten durch eine dünne Dichtung (33) über die gesamte Oberfläche der Bissgabeln (2, 4) abgedichtet sind.

2. Instrument zur Messung der Position des Unterkiefers nach Anspruch 1, **dadurch gekennzeichnet, dass** sich sowohl die untere als auch die obere Bissgabel dorsal in Bezug auf die Seite der Bissgabel verjüngen, welche auf die Kauflächen der Zähne ausgerichtet ist, so dass die natürliche Krümmung der Zahnbögen, wie sie durch die Spee-Kurve definiert ist, eingehalten wird und die Vorwärtsbewegung des Unterkiefers durch diese individuelle Krümmung der Reihe von Kauflächen nicht behindert wird.

3. Instrument zum Messen der Position des Unterkiefers nach Anspruch 1, **dadurch gekennzeichnet, dass** das Instrument mit einem Gleitteil (14) über den Verlängerungen (5, 11) versehen ist, nicht nur um die Verlängerungen der oberen und unteren Bissgabel zusammenzuhalten, sondern auch als Mittel für den Bediener des Instruments 1, um die gewünschten Markierungen (28, 29, 30) auf der oberen Verlängerung (5) entsprechend einer bestimmten Anzahl von Positionen des Unterkiefers vorzunehmen, insbesondere mindestens den maximalen Überstand (28) und die maximale Retrusion (29) und die ausgewählte Überstandsposition (30) zur Herstellung einer oralen Korrekturvorrichtung.

4. Instrument zur Messung der Position des Unterkiefers nach Anspruch 1 oder 2, **dadurch gekennzeichnet, dass** die einzelnen Bissgabeln (2, 4) mit den Verlängerungen (5, 11) eine genaue Position im Mund des Patienten definieren, um die Überwachung einzelner Patienten im Laufe der Zeit zu ermöglichen, indem das zuvor entfernte Instrument wieder in den Mund des Patienten gelegt wird.

5. Instrument zur Positionierung des Unterkiefers nach Anspruch 1 oder 2, **dadurch gekennzeichnet, dass** seine Komponenten (2, 3, 4, 5, 11, 14, 18) aus Materialien hergestellt sind, die für automatisierte Produktionsverfahren wie das Spritzgießen von Polymeren, numerisch gesteuerte Fräsmaschinen für Metalle oder Robotik oder andere automatisierte Produktionsverfahren, einschließlich solcher für sterilisierbare Materialien, geeignet sind.

6. Verfahren zur Verwendung des Instruments (1) zum Messen der Position des Unterkiefers, das in einem der vorhergehenden Ansprüche beschrieben ist und mindestens die folgenden Schritte umfasst:
1) die Bestimmung der natürlichen habituellen Okklusion, indem der Patient zum Beißen gebracht und die Zahnbögen gegeneinander gebracht werden, ohne dass sich etwas zwischen den antagonistischen Zahnbögen befindet;
2) das Einführen der oberen Bissgabel (2) gegen den oberen Zahnbogen (19) des Patienten, wobei die Zwischenzahnlinie (23a) zwischen den beiden oberen mittleren frontalen Schneidezähnen (21, 22) mit der Längsmittellinie (6) der Verlängerung (5) der oberen Bissgabel (2) übereinstimmen und wobei die äußerste vestibuläre Ebene dieser oberen Schneidezähne (21, 22) gegen eine aufrechte Kante (8) mit einer Kerbe (7) anliegt, wiederum mit der Zwischenzahnlinie (23a) zwischen beiden Frontzähnen (21, 22) in Übereinstimmung mit der Kerbe (7);
3) das optionale Anbringen einer Verdickung, beispielsweise in Form von Endstücken (31, 32) geeigneter Dicke in den vorhandenen Rückhaltelöchern auf Höhe der Schneidezähne in der oberen und/oder unteren Bissgabel zur Einstellung der Dicke der betreffenden Bissgabel oder der Bissgabeln, oder in Form einer dickeren Bissgabel.
4) das Einbringen der unteren Bissgabel (4) gegen den unteren Zahnbogen (20) unter Berücksichtigung einer analogen Positionierung der unteren vorderen Schneidezähne (24, 25) in Bezug auf die untere Kante (13) mit Kerbe (12) an der unteren Bissgabel (4);
5) das Einbringen einer Bissregistrierpaste (26) aus unelastischem, selbstpolymerisierendem Material gegen die Mundseite der oberen (8) und der unteren (13) Kante der beiden Bissgabeln (2, 4);
6) das sorgfältige Platzieren der beiden Bissgabeln (2, 4) im Mund, wobei die Mittellinien (6) der Verlängerungen (5, 11) mit der Zwischenzahnreihe (23a, 23b) übereinstimmen und wobei die beiden Bissgabeln (2, 4) durch ein Gleitteil (14) zusammengehalten werden;
7) Aushärtenlassen der Bissregistrierpaste (26), bis die oberen (21, 22) und unteren (24, 25) Schneidezähne auf der oberen (2) bzw. unteren (4) Bissgabel positioniert sind, woraufhin das Instrument (1) aus dem Mund des Patienten entnommen wird;
8) das Lösen der Stellschraube (18), die die obere und untere Bissgabel (2, 4) so fixiert, so dass die obere (2) und untere (4) Bissgabel in horizontaler Ebene frei gegeneinander gleiten, wobei sichergestellt ist, dass sich die untere Bissgabel (4) nicht zu stark bewegt;
9) Einsetzen des Instruments (1) zurück in den Mund des Patienten, wobei der Patient seine vorderen Schneidezähne (21, 22, 24, 25) in der vorgeformten Bissregistrierpaste (26) positioniert;
10) den Unterkiefer in der horizontalen Ebene zwischen den beiden Bissgabeln (2, 4) ohne Messungen so gerade wie möglich nach vorne und hinten bewegen lassen und einige Male wiederholen, damit die Kaumuskeln des Patienten geschmeidig werden, das Kiefergelenk geschmeidig wird und der Patient mit der Übung vertraut wird;
11) den Patienten seinen Unterkiefer so weit wie möglich nach vorne bewegen lassen, ohne seinen Mund zu öffnen und ohne zu viel Kraft auf das Instrument auszuüben, und diese Position (28) mit Markierungsmitteln registrieren und vorzugsweise einige Male wiederholen, um die Genauigkeit der Messung zu erhöhen;
12) den Patienten seinen Unterkiefer so weit wie möglich nach hinten bewegen lassen, ohne seinen Mund zu öffnen und ohne zu viel Kraft auf das Instrument auszuüben, und diese Position (29) mit Markierungsmitteln registrieren und vorzugsweise einige Male wiederholen, um die Genauigkeit der Messung zu erhöhen;
13) schließlich die allmähliche und sanfte Vorwärtsbewegung seines Unterkiefers durch den Patienten aus einer rückwärtig gelegenen Position bis zu der Position, die der Patient je nach Eigenschaften und Fähigkeiten des Patienten ohne allzu viel Unbehagen einnehmen kann, und vorzugsweise diese Bewegung einige Male wiederholen, um sicher zu sein, dass diese bevorzugte Position (30) vom Patienten reproduzierbar eingenommen werden kann, um dann diese beste Position für den Patienten zwischen der vorderen und der hinteren Position auf dem Instrument durch Markierungsmittel in Bezug auf die vordere und hintere Positionsmarkierung unterscheidend zu erfassen;
14) das Einschrauben der Stellschraube (18) am Instrument (1), so dass sich die Bissgabeln (2, 4) nicht mehr gegeneinander bewegen und das Instrument (1) aus dem Mund nehmen;
15) das Aufbringen von Bissregistrierpaste (26) oder einem anderen Befestigungsmittel über die gesamte Bogenlänge der oberen Bissgabel (2) und der unteren Bissgabel (4), um sicherzustellen, dass die untere Bissgabel (4) korrekt positioniert bleibt, und zwar gleichzeitig oder Bissgabel für Bissgabel;
16) das Einführen des Instruments (1) wieder in den Mund, in verschiedenen Phasen oder anderweitig und das Aushärten der Bissregistrierpaste (26) auf einer oder beiden Bissgabeln (2, 4) gleichzeitig, in der gewählten Position;
17) Herausnehmen des Instruments (1) aus dem Mund zur Positionierung des Unterkiefers und gründliches Spülen unter fließendem Wasser und/oder Föhnen mit ölfreier Druckluft;
18) die Abgabe des Instruments (1) mit den Abdrücken des oberen Zahnbogens (19) und des unteren Zahnbogens (20) in der Registrierpaste (27) auf den Bissgabeln (2, 4), die als Hilfsmittel für die Herstellung einer oralen Korrekturvorrichtung für den betroffenen Patienten dienen;
19) die optionale Lieferung des Instruments (1) gemäß Schritt 18) mit dem Zusatz eines angepassten, zur Platzierung in einem Simulator geeigneten Einschneidestifts, so dass die Bissgabeln mit Verlängerungen ohne sterische Hinderung in den Simulator eingesetzt werden können, was es dem Techniker ermöglicht, die orale Korrekturvorrichtung unter optimalen Bedingungen herzustellen;
20) die Demontage des Instruments (1), wobei beide Bissgabeln (2, 4) freigegeben und gereinigt werden, so dass das Instrument (1) wiederverwendet werden kann, und neue Messungen damit bei einem anderen Patienten oder bei demselben Patienten zu einem anderen Zeitpunkt durchgeführt werden können.

## Revendications

1. Instrument (1) de mesure de la position de la mâchoire inférieure, pourvu d'une fourchette supérieure (2) et d'une fourchette inférieure (4) qui peuvent être adaptées individuellement à l'arcade dentaire supérieure (19) et inférieure (20) d'un patient, les fourchettes supérieure (2) et inférieure (4) étant chacune pourvue d'une extension (5, 11) qui s'étend dans un plan horizontal en avant des dents du patient lorsque l'instrument (1) est placé dans la bouche du patient, de telle sorte que les extensions (5, 11) s'étendent à l'extérieur de la bouche du patient, et ces extensions permettant aux fourchettes (2, 4) de se déplacer l'une par rapport à l'autre dans le plan de déplacement horizontal alors que l'instrument est placé dans la bouche du patient, et qui permet d'enregistrer la position relative des fourchettes et par conséquent la position relative des arcades dentaires supérieure et inférieure (19, 20) à l'extérieur de la bouche du patient, les fourchettes supérieure (2) et inférieure (4) ayant des trous de rétention (3) pour l'ancrage mécanique d'un matériau d'enregistrement à appliquer, et ces trous de rétention (3) étant scellés à la partie inférieure par un mince joint (33) sur toute la surface des fourchettes (2, 4).

2. Instrument de mesure de la position de la mâchoire inférieure selon la revendication 1, **caractérisé en ce que** la fourchette inférieure et la fourchette supérieure sont effilées sur leur partie dorsale par rapport au côté de la fourchette qui est orienté vers les surfaces de mastication des dents de telle sorte que la courbure naturelle des arcades dentaires, telle que défini par la courbe de Spee, soit respectée et que le mouvement vers l'avant de la mâchoire inférieure ne soit pas entravé par cette courbure individuelle de la rangée de surfaces de mastication.

3. Instrument de mesure de la position de la mâchoire inférieure selon la revendication 1, **caractérisé en ce que** l'instrument comprend une partie coulissante (14) sur les extensions (5, 11), non seulement pour maintenir ensemble les extensions de la fourchette supérieure et de la fourchette inférieure, mais également en tant que moyen permettant à l'opérateur de l'instrument 1 d'effectuer les marquages souhaités (28, 29, 30) sur l'extension supérieure (5), correspondant à un certain nombre de positions de la mâchoire inférieure, c'est-à-dire au moins la position de protrusion maximale (28) et de rétrusion maximale (29), et la position de protrusion sélectionnée (30) pour la production d'un dispositif de correction orale.

4. Instrument de mesure de la position de la mâchoire inférieure selon la revendication 1 ou 2, **caractérisé en ce que** les fourchettes individuelles (2, 4) avec les extensions (5, 11) définissent une position précise dans la bouche du patient pour permettre la surveillance de patients individuels au cours du temps en replaçant dans la bouche du patient l'instrument enlevé préalablement.

5. Instrument de positionnement de la mâchoire inférieure selon la revendication 1 ou 2, **caractérisé en ce que** les composants (2, 3, 4, 5, 11, 14, 18) de cet instrument sont fabriqués en matériaux appropriés pour des procédés de production automatisés tels que le moulage par injection de polymères, pour des machines de fraisage de métaux à commande numérique ou des robots ou d'autres procédés de production automatisés incluant ceux pour les matériaux stérilisables.

6. Procédé d'utilisation de l'instrument (1) de mesure de la position de la mâchoire inférieure selon l'une des revendications précédentes, consistant en au moins les étapes suivantes :
1) la détermination de l'occlusion naturelle habituelle en demandant au patient de mordre et d'amener les arcades dentaires l'une contre l'autre sans que rien ne s'interpose entre les arcades dentaires antagonistes ;
2) l'introduction de la fourchette supérieure (2) contre l'arcade dentaire supérieure (19) du patient avec la ligne inter-incisives (23a) entre les deux incisives frontales centrales supérieures (21, 22) alignée avec l'axe central longitudinal (6) de l'extension (5) de la fourchette supérieure (2), et avec le plan vestibulaire le plus extérieur de ces incisives frontales supérieures (21, 22) contre un bord droit (8) avec une encoche (7), à nouveau avec la ligne inter-incisives (23a) entre les deux incisives frontales (21, 22) alignée avec l'encoche (7) ;
3) la fixation optionnelle d'un épaississement, par exemple sous la forme de pièces d'extrémité (31, 32) d'une épaisseur appropriée dans les trous de rétention existants au niveau des incisives dans la fourchette supérieure et/ou inférieure pour ajuster l'épaisseur de la ou des fourchettes concernées, ou sous la forme d'une fourchette plus épaisse ;
4) l'introduction de la fourchette inférieure (4) contre l'arcade dentaire inférieure (20) en tenant compte d'un positionnement analogue des incisives frontales inférieures (24, 25) par rapport au bord inférieur (13) avec encoche (12) sur la fourchette inférieure (4) ;
5) l'introduction d'une pâte d'enregistrement de morsure (26) en matériau inélastique auto-polymérisant contre le côté bouche du bord droit (8) et du bord orienté vers le bas (13) des deux fourchettes (2, 4) ;
6) le positionnement précis des deux fourchettes (2, 4) dans la bouche, les axes centraux (6) des extensions (5, 11) étant alignés avec la ligne inter-incisives (23a, 23b) et les deux fourchettes (2, 4) étant maintenues ensemble par une partie coulissante (14) ;
7) le fait de laisser durcir la pâte d'enregistrement de morsure (26) jusqu'à ce que les incisives frontales supérieures (21, 22) et inférieures (24, 25) soient positionnées sur la fourchette supérieure (2) et la fourchette inférieure (4), respectivement, après quoi l'instrument (1) est ressorti de la bouche du patient ;
8) le desserrage de la vis de fixation (18) qui fixe la fourchette supérieure et la fourchette inférieure (2, 4) de telle sorte que la fourchette supérieure (2) et la fourchette inférieure (4) glissent librement l'une par rapport à l'autre dans un plan horizontal, pour garantir que la fourchette inférieure (4) ne bouge pas trop ;
9) la réinsertion de l'instrument (1) dans la bouche du patient, le patient positionnant ses incisives frontales (21, 22, 24, 25) dans la pâte d'enregistrement de morsure préformée (26) ;
10)le fait de laisser le patient déplacer sa mâchoire inférieure de manière aussi droite que possible vers l'avant et vers l'arrière dans le plan horizontal entre les deux fourchettes (2, 4) sans prendre de mesure, et répéter ceci plusieurs fois de telle sorte que les muscles masséters du patient s'assouplissent, que l'articulation temporo-mandibulaire s'assouplisse et que le patient se familiarise avec cet exercice ;
11)le fait de laisser le patient déplacer sa mâchoire inférieure vers l'avant au maximum sans ouvrir la bouche et sans exercer trop de force sur l'instrument et l'enregistrement de cette position (28) par des moyens de marquage, et de préférence le fait de répéter ceci plusieurs fois afin de renforcer la précision de la mesure ;
12)le fait de laisser le patient déplacer sa mâchoire inférieure vers l'arrière au maximum sans ouvrir la bouche et sans exercer trop de force sur l'instrument, et l'enregistrement de cette position (29) par des moyens de marquage, et de préférence le fait de répéter ceci plusieurs fois afin de renforcer la précision de la mesure ;
13)finalement, le mouvement progressif et doux vers l'avant de la mâchoire inférieure par le patient depuis une position située en arrière jusqu'à la position que le patient peut adopter sans trop d'inconfort, en fonction des caractéristiques et des capacités du patient, de préférence le fait de répéter ce mouvement plusieurs fois afin de s'assurer que cette position préférée (30) peut être adoptée de manière répétée par le patient, afin d'ensuite enregistrer cette position optimale pour le patient entre la position avant et la position arrière sur l'instrument par des moyens de marquage de manière distincte des marquages de position avant et arrière ;
14)le vissage de la vis de fixation (18) sur l'instrument (1) de telle sorte que les fourchettes (2, 4) ne se déplacent plus l'une par rapport à l'autre et l'enlèvement de l'instrument (1) hors de la bouche ;
15) l'application de pâte d'enregistrement de morsure (26) ou d'un autre moyen de fixation sur toute la longueur d'arcade de la fourchette supérieure (2) et de la fourchette inférieure (4), en s'assurant que la fourchette inférieure (4) reste positionnée correctement, et ce simultanément ou bien une fourchette à la fois ;
16) l'introduction de l'instrument (1) à nouveau dans la bouche, en différentes phases ou autrement, et le fait de laisser la pâte d'enregistrement de morsure (26) durcir sur une ou sur les deux fourchettes (2, 4), simultanément, dans la position choisie ;
17) le fait de sortir l'instrument (1) de la bouche pour le positionnement de la mâchoire inférieure et le rinçage soigneux à l'eau courante et/ou le séchage avec un flux d'air comprimé exempt d'huile ;
18)la fourniture de l'instrument (1) avec les impressions de l'arcade dentaire supérieure (19) et de l'arcade dentaire inférieure (20) dans la pâte d'enregistrement (27) sur les fourchettes (2, 4) qui servent d'aides pour la production d'un dispositif de correction orale pour le patient en question ;
19) la fourniture optionnelle de l'instrument (1) selon l'étape 18), avec l'ajout d'une broche incisive adaptée, pouvant être positionnée dans un simulateur, de telle sorte que les fourchettes avec les extensions puissent être placées dans le simulateur sans encombrement stérique, ce qui permet au technicien de produire le dispositif de correction orale dans des conditions optimales ;
20)le démontage de l'instrument (1), les deux fourchettes (2, 4) étant détachées et nettoyées de telle sorte que l'instrument (1) puisse être réutilisé, et que de nouvelles mesures puissent être faites avec celui-ci sur un autre patient ou sur le même patient à un autre moment.
